Europäisches Patentamt

(19) European Patent Office

Office européen des brevets

(11) Publication number : **0 337 641 B1**

# (12) EUROPEAN PATENT SPECIFICATION

(45) Date of publication of patent specification :
04.03.92 Bulletin 92/10

(51) Int. Cl.⁵ : **E21D 21/00, F16B 13/06**

(21) Application number : **89303316.7**

(22) Date of filing : **04.04.89**

(54) **Wall ties.**

(30) Priority : **05.04.88 GB 8807905**

(43) Date of publication of application :
**18.10.89 Bulletin 89/42**

(45) Publication of the grant of the patent :
**04.03.92 Bulletin 92/10**

(84) Designated Contracting States :
**BE DE FR NL**

(56) References cited :
**EP-A- 0 146 453**
**EP-A- 0 182 565**
**GB-A- 2 129 084**
**GB-A- 2 132 299**
**US-A- 3 303 736**

(73) Proprietor : **Adams, Hayden John**
**14 Presteigne Avenue Ton-Teg**
**Pontypridd Mid-Glamorgan CF38 1LE (GB)**
Proprietor : **Edwards, William John**
**High Bank Pen-y-Lan Road Argoed**
**Blackwood Gwent NP2 0AZ (GB)**

(72) Inventor : **Adams, Hayden John**
**14 Presteigne Avenue Ton-Teg**
**Pontypridd Mid-Glamorgan CF38 1LE (GB)**
Inventor : **Edwards, William John**
**High Bank Pen-y-Lan Road Argoed**
**Blackwood Gwent NP2 0AZ (GB)**

(74) Representative : **Austin, Hedley William et al**
**Urquhart-Dykes & Lord Alexandra House 1**
**Alexandra Road**
**Swansea West Glamorgan SA1 5ED (GB)**

EP 0 337 641 B1

## Description

The present invention is concerned with wall ties, primarily intended as replacements for corroded wall ties.

Wall ties are employed in the construction of cavity walls for tying together the inner and outer skins of the wall. A particular problem has arisen over recent years with corrosion of such wall ties, which has necessitated the replacement of the corroded ties. The conventional procedure is to drill a hole from the outside through the outer skin to form a blind bore in the inner skin, inserting through the hole a wall tie with an anchoring device at each end thereof, and successively anchoring one of the anchoring devices in the blind bore in the inner skin and the other of the anchoring devices in the outer skin. Various replacement wall ties for this purpose have been described in, for example, U.K. Specifications 2065757, 2087944, 2115851 and 2132730, and European Specification 182565. In the latter document, the anchoring assemblies disclosed comprise tubular members incorporating longitudinal slits, together with opposed abutments such that the tubular members are caused to expand radially so as to engage the relevant skin of the wall.

While such anchoring assemblies are generally very satisfactory, there is occasionally a risk of the entire end of the tie being pulled right through the expanded tubular member, with consequent failure of the tying action. It is an object of the invention to at least alleviate the problem described above.

The present invention provides an elongate wall tie for tying together respective inner and outer skins of a cavity wall, the wall tie comprising a first anchorage assembly at a threaded first end thereof; and a second anchoring assembly near the other end thereof; the first anchoring assembly comprising a pair of opposed tapered abutment members which taper inwardly towards one another, the abutment member closest to the first end being frustoconial and having a surface facing the other abutment member which is transverse to the axis of the wall tie, and a tubular sleeve located between the abutment members, the abutment members being relatively movable so as to cause at least the ends of the tubular sleeve to expand radially outwardly, the tubular sleeve being provided with an inward projection arranged for engagement with the transverse surface so as to substantially inhibit longitudinal movement of the abutment member closest to the first end relative to the sleeve.

Typically, the body of the wall tie according to the invention is a rod having a threaded first end of a first hand, a threaded portion of the opposite hand being provided near the other end for receiving the second anchoring assembly.

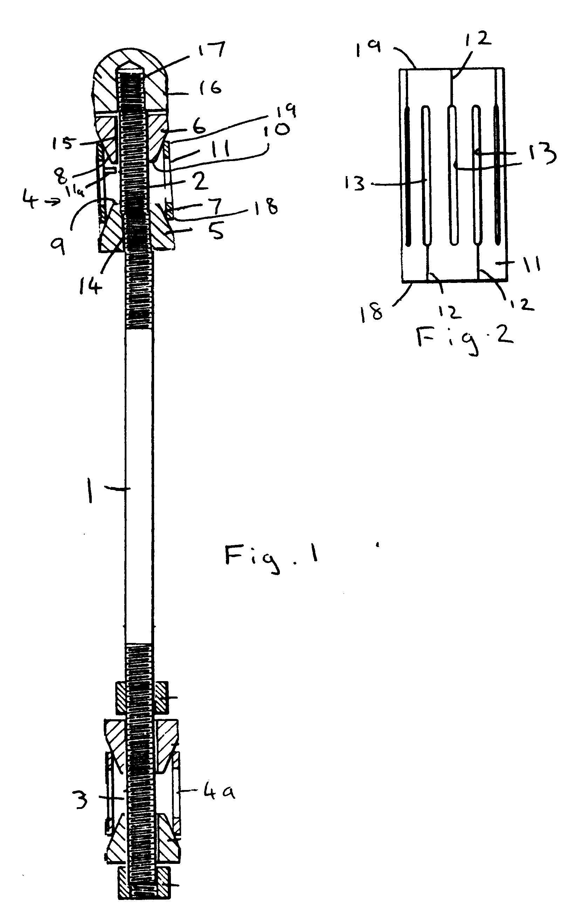

Reference will now be made to the accompanying drawings, in which Figure 1 is a longitudinal sectional view of an exemplary wall tie according to the invention;

Figure 2 is a side elevation, on an enlarged scale, of an exemplary expandable sleeve suitable for use on the wall tie shown in Figure 1;

Figure 3 is a side view of an alternative to the end of the wall tie shown in Figure 1; and

Figure 4 is a cross-section of the sleeve employed in the wall tie shown in Figure 3.

Referring to Figure 1, there is shown a wall tie comprising a rod 1 with threaded end portions 2,3 of opposite hand. Threaded end portion 2 has threaded thereon an anchoring assembly 4; a broadly similar anchoring assembly 4a (which will not be described in detail) is provided at end 3. Anchoring assembly 4 according to the invention comprises a first frustoconical member 5 and a second frustoconical member 6, each of which has a respective inwardly tapering surface 7,8 and a respective inwardly facing transverse end face 9,10. Located between the frustoconical members is a tubular sleeve 11, which (as can be seen in Figure 2) has a series of alternating slits 12 extending from the two ends thereof; the slits as illustrated have enlarged central portions 13 which help to allow the free ends of the sleeve 11 to splay outwardly, as will be described below.

Frustoconical member 5 is internally threaded at 14 for engagement with the threaded end portion 2; frustoconical member 6 has a plain bore 15 therethrough. An internally threaded cap member 16 is provided for the free end 17 of threaded end portion 2; this is such that tightening of the rod causes relative movement of frustoconical members 5,6 towards one another, so as to cause radial expansion ("splaying") of the ends 18,19 of the sleeve 11, so that the latter can be made to "bite" into a blind bore in an inner skin of a cavity wall.

Sleeve 11 is provided with an inwardly projecting radial lug 11a, arranged to engage transverse end face 10 and resist an applied force which would otherwise tend to pull the frustoconical member 6 through the sleeve 11.

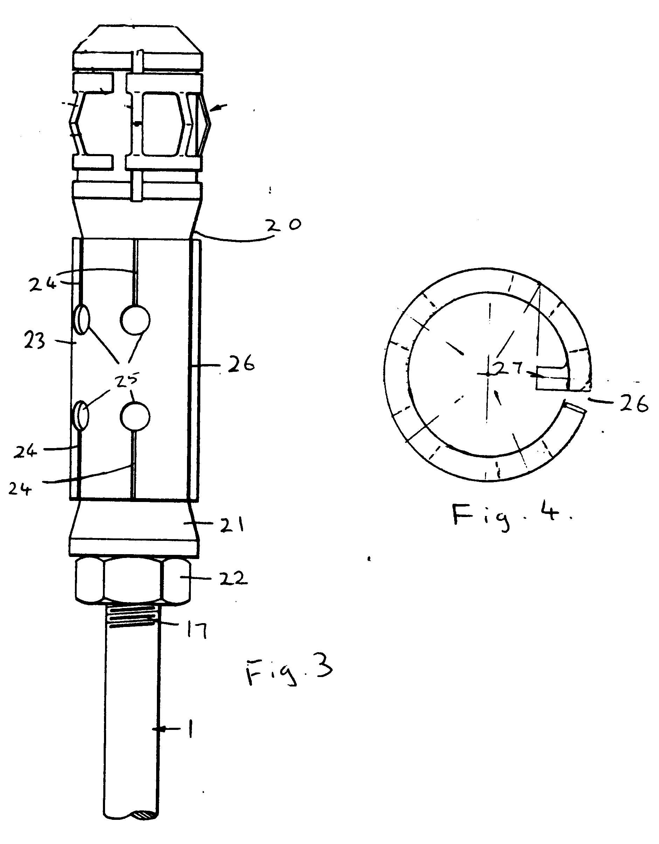

Referring to Figure 3, in which like parts are denoted by like reference numerals, the frustoconical member 20 nearest the free end of threaded end portion 17 is internally threaded, while frustoconical member 21 spaced there from is provided with a plain bore (not shown) and is engaged by a separate nut 22. The sleeve 23 is broadly similar to that shown in Figures 1 and 2, except that slits 24 extend from opposite ends to enlarged circular apertures 25; a continuous slit 26 extends from end to end of the sleeve 23.

Adjacent slit 26 (see Figure 4) is an inwardly extending radial lug 27 arranged to engage with the end face of frustoconical member 20, so as to resist an applied force tending to pull the frustoconical member through the sleeve 21.

## Claims

1. An elongate wall tie for tying together respective inner and outer skins of a cavity wall, said wall tie comprising a first anchoring assembly (4) at a threaded first end thereof; and a second anchoring assembly (4a) near the other end thereof; said first anchoring assembly comprising a pair of opposed tapered abutment members (5,6) which taper inwardly towards one another, a first one of said abutment members (6), which is closest to said first end, being frustoconial and having a surface (10) facing the other of said abutment members (5) which is transverse to the axis of said wall tie, and a tubular sleeve (11) located between said abutment members (5,6), said abutment members being relatively movable so as to cause at least the ends of said tubular sleeve to expand radially outwardly, characterised in that said tubular sleeve (11) is provided with an inward projection (11a) arranged for engagement with said transverse surface so as to substantially inhibit longitudinal movement of said first abutment member (6) relative to said sleeve (11).

2. A wall tie according to claim 1, which comprises an elongate rod (1) having two threaded ends (2,3), one end having a first hand, and the other end having the opposite hand and being arranged for receiving said second anchoring assembly (4a).

3. A wall tie according to claim 1 or 2, in which said projection (11a) extends substantially radially of said sleeve.

4. A wall tie according to any of claims 1 to 3, in which said transverse surface (10) is substantially perpendicular to the axis of said tubular sleeve (11) and of said frustoconial abutment member (4).

## Patentansprüche

1. Länglicher Wandanker zum Verbinden von Innen- und Außenwand einer Hohlmauer, wobei besagter Wandanker an seinem mit einem Gewinde versehenen ersten Ende eine erste Verankerungsbaugruppe (4) und nahe seines anderen Endes eine zweite Verankerungsbaugruppe (4a) besitzt, besagte erste Verankerungsbaugruppe aus einem Paar sich gegenüberliegender, konischer Widerlagerteile (5,6) besteht, die sich nach innen, aufeinander zu verjüngen, wobei ein erstes der besagten Widerlagerteile (6), welches am dichtesten zu besagtem ersten Ende ungeordnet ist, kegelstumpfförmig ist und eine Fläche (10) besitzt, die dem anderen der besagten Widerlagerteile (5), das transversal zur Achse des besagten Wandankers liegt, zugekehrt ist, sowie zwischen den besagten Widerlagerteilen (5,6) eine rohrförmige Hülse (11) angeordnet ist, wobei die besagten Widerlagerteile relativ so bewegbar sind, daß wenigstens die Enden der besagten rohrförmigen Hülse radial nach außen gedrückt werden, dadurch gekennzeichnet, daß besagte rohrförmige Hülse (11) mit einem nach innen weisenden Vorsprung (11a) versehen ist, der für einen Eingriff mit besagter transversaler Fläche angeordnet ist, um so im wesentlichen eine Längsbewegung des besagten ersten Widerlagerteils (6) relativ zu besagter Hülse (11) zu verhindern.

2. Wandanker nach Anspruch 1, der aus einem länglichen Rundstab (1) besteht, welcher zwei mit Gewinde versehene Enden (2,3) besitzt, wobei das eine Ende eine erste Drehrichtung und das andere Ende eine entgegengesetzte Drehrichtung aufweist, sowie für die Aufnahme des besagten zweiten Widerlagers (4a) bestimmt ist.

3. Wandanker nach den Ansprüchen 1 oder 2, bei dem besagter Vorsprung (11a) sich im wesentlichen radial von besagter hülse erstreckt.

4. Wandanker nach einem der vorhergehenden Ansprüche 1 bis 3, bei dem besagte transversale Fläche (10) im wesentlichen senkrecht zur Achse der besagten rohrförmigen Hülse (11) und der besagten kegelstumpfförmigen Verankerungsbaugruppe (4) verläuft.

## Revendications

1. Boulon allongé d'ancrage de paroi pour assembler entre elles les parois intérieure et extérieure respectives d'un mur creux, ledit boulon d'ancrage de paroi comprenant un premier ensemble d'ancrage (4) à sa première extrémité filetée ; un second ensemble d'ancrage (4a) à proximité de son autre extrémité ; ledit premier ensemble d'ancrage comportant deux éléments de butée tronconiques placés face à face (5, 6) qui sont effilés vers l'intérieur en direction l'un de l'autre, un premier desdits éléments de butée (6) qui est le plus rapproché de ladite première extrémité qui est tronconique comporte une surface (10) faisant face à l'autre desdits éléments de butée (5) qui est perpendiculaire à l'axe dudit boulon d'ancrage de paroi et un manchon tubulaire (11) situé entre lesdits éléments de butée (5, 6) qui sont mobiles l'un par rapport à l'autre de façon à forcer au moins les extrémités dudit manchon tubulaire à se dilater radialement vers l'extérieur, caractérisé en ce que ledit manchon tubulaire (11) comporte une partie en saillie vers l'intérieur (11a) agencée pour venir en prise avec ladite surface transversale afin d'empêcher sensiblement le mouvement longitudinal dudit premier élément de butée (6) par rapport audit manchon (11).

2. Boulon d'ancrage de paroi selon la revendication 1, caractérisé en ce qu'il rend une tige allongée (1) ayant deux extrémités filetées (2, 3) dont l'une étant filetée dans un premier sens et l'autre dans le sens opposé, cette dernière recevant ledit second ensemble d'ancrage (4a).

3. Boulon d'ancrage de paroi selon la revendication 1 ou 2, caractérisé en ce que ladite partie en saillie (11a) s'étend sensiblement dans une direction radiale par rapport audit manchon.

4. Boulon d'ancrage de paroi selon l'une quelconque des revendications 1 à 3, caractérisé en ce que ladite surface transversale (10) est sensiblement perpendiculaire à l'axe dudit manchon tubulaire (11) et dudit élément tronconique de butée (4).

Fig. 1

Fig. 2

Fig. 3

Fig. 4